# EUROPÄISCHE PATENTSCHRIFT

(11) **EP 3 450 360 B1**
(45) Veröffentlichungstag und Bekanntmachung des Hinweises auf die Patenterteilung: **11.02.2026**
(21) Anmeldenummer: 18179764.8
(22) Anmeldetag: 26.06.2018
(51) Int. Cl.: B65G 47/51, B65G 47/84

(54) **TRANSPORTVORRICHTUNG ZUM TRANSPORTIEREN VON PUCKS**
TRANSPORT DEVICE FOR TRANSPORTING PUCKS
DISPOSITIF DE TRANSPORT DESTINÉ AU TRANSPORT DE PALETS

(30) Priorität: 04.09.2017 DE 102017215455
(43) Veröffentlichungstag der Anmeldung: 06.03.2019
(73) Patentinhaber: KRONES AG, 93073 Neutraubling (DE)
(72) Erfinder: Bauer, Veronika, 93073 Neutraubling (DE); Mildner, Thomas, 93073 Neutraubling (DE); Jogsch, Michael, 93073 Neutraubling (DE); Duenzinger, Johannes, 93073 Neutraubling (DE); Heigl, Stefan, 93073 Neutraubling (DE); Muehlstein, Peter, 93073 Neutraubling (DE); Paul, Christian, 93073 Neutraubling (DE)
(74) Vertreter: Grünecker Patent- und Rechtsanwälte PartG mbB

(56) Entgegenhaltungen:
- EP-A1- 1 281 643
- EP-A1- 1 645 340
- EP-A1- 2 848 416
- EP-A1- 2 889 238
- WO-A1-2004/110905
- DE-A1- 102011 080 441
- DE-A1- 102013 112 091
- US-A- 3 776 395

## Beschreibung

Die Erfindung betrifft eine Transportvorrichtung zum Transportieren von Pucks, die zum Behältertransport ausgebildet sind, umfassend eine Puck-Transportstrecke zum Transportieren von Pucks zu einer Behälter-Behandlungsmaschine hin, insbesondere zu einer Direktdruckmaschine oder einem Etikettierer, und von der Behälter-Behandlungsmaschine weg.

Es ist bekannt, in Behälter-Behandlungsanlagen Behälter zwischen verschiedenen Bereichen der Behandlungsanlagen, insbesondere hin zu oder weg von Behälter-Behandlungsmaschinen, beispielsweise Etikettieren oder Direktdruckmaschinen, in Pucks stehend zu transportieren. Dabei wird jeweils ein Behälter in einem Puck stehend transportiert. Die Pucks weisen dazu Aufnahmen auf, in denen die Behälter stehen und durch deren Wände die Behälter seitlich gestützt werden.

Beispielsweise werden dabei Pucks entlang einer Puck-Transportstrecke zum Einlauf einer Behälter-Behandlungsmaschine hin transportiert, dort werden die Behälter über einen Einlaufstern an die Behälter-Behandlungsmaschine übergeben und dort behandelt.

Nach der Behandlung in der Behälter-Behandlungsmaschine werden die Behälter mit einem Auslaufstern aus der Behälter-Behandlungsmaschine entnommen, wieder in Pucks gesetzt und von der Behälter-Behandlungsmaschine in Pucks stehen wegtransportiert.

Für die Entnahme der Behälter aus den Pucks und ihre Übergabe an den Einlaufstern bzw. für die Übernahme der Behälter von dem Auslaufstern und Einsetzen in die Pucks, wird ein Zwischenstern vorgesehen, der das Gegenstück zum Einlaufstern bzw. Auslaufstern bildet. Der Zwischenstern kann als Hebestern ausgebildet sein, der die Behälter greift und aus den Pucks hebt. Die Pucks selbst laufen dann weiter vom Einlaufstern zum Auslaufstern, um dort die behandelten Behälter aufnehmen zu können.

Bei derartigen Transportvorrichtungen besteht die Möglichkeit, eine Drei-Stern-Anordnung zu verwenden, bei der der Einlaufstern und der Auslaufstern sich einen Zwischenstern, beispielsweise einen Hebestern teilen.

In dieser Konfiguration werden zu Beginn einer Charge von Behältern immer leere Pucks aus dem Auslauf der Behälter-Behandlungsmaschine abtransportiert werden, solange die ersten Behälter in der Behälterbehandlungsanlage behandelt werden. Außerdem müssen hinter den Pucks, die die letzten Behälter einer Charge antransportieren, leere Pucks nachgeschickt werden, damit ausreichend Pucks für die Übernahme aus der Behälter-Behandlungsmaschine vorhanden sind.

Weiterhin sind Unterbrechungen des Betriebs der Behälter-Behandlungsmaschine während der Behandlung einer Charge problematisch, da dann oft die Behälter-Behandlungsmaschine leergefahren werden muss, ohne dass Behälter weiter der Behälter-Behandlungsmaschine zugeführt werden und somit leere Pucks zur Entnahme aus der Behälter-Behandlungsmaschine nachkommen. In dieser Situation fehlen also Pucks zum Übernehmen der Behälter, die sich bereits in der Behälter-Behandlungsmaschine befinden.

EP 2 889 238 A1 offenbart eine Transfervorrichtung zum Transfer von Artikeln entlang eines Pfades.

EP 1 645 340 A1 zeigt eine Sortiervorrichtung und Fördervorrichtung für Stückgut sowie ein Verfahren zum Sortieren oder Fördern von Stückgut.

DE 10 2011 080 441 A1 veröffentlicht eine Speichervorrichtung für eine Abfüllanlage und eine Getränkeabfüllanlage mit einer solchen Speichervorrichtung.

EP 2 848 416 A1 publiziert einen Transport für Packmittel sowie eine Vorrichtung zum Behandeln von Packmitteln mit einem solchen Transportsystem.

US 3,776,395 offenbart ein Transportsystem mit Paletten vorzugsweise zur Handhabung von Flughafengepäck.

EP 1 281 643 A1 zeigt eine automatische Linearmaschine zur Orientierung und Ausrichtung von Artikeln.

WO 2004/110905 A1 veröffentlicht eine Vorrichtung zum kontinuierlichen Befüllen und Verschließen einseitig offener Karton/Kunststoff-Verbundpackungen und einen Zellenkäfig zum Transport solcher Packungen in der Vorrichtung.

DE 10 2013 112 091 A1 publiziert eine Vorrichtung zur Aufgabe und/oder Entnahme von Objekten auf eine und/oder von einer Behandlungsmaschine.

Es ist somit Aufgabe der Erfindung, eine Transportvorrichtung zum Transportieren von Pucks bereitzustellen, bei der der Puck-Fluss am Anfang und Ende einer Charge sowie bei Unterbrechungen des Betriebs der Behälterbehandlungsanlage optimiert wird.

Zur Lösung der Aufgabe stellt die Erfindung eine Transportvorrichtung gemäß Anspruch 1 bereit.

Somit können die anfangs leer von der Behälter-Behandlungsmaschine weg transportierten Pucks in den Puck-Puffer eingeschleust und dort zwischengelagert werden und dann bei Bedarf, also beispielsweise am Ende einer Charge oder bei einer Unterbrechung des Betriebs der Behälter-Behandlungsmaschine, wieder eingeschleust werden. Somit wird der Behälterfluss optimiert, insbesondere zu den kritischen Zeitpunkten im Prozessablauf. Es ist nicht nötig, zusätzliche Pucks vorzusteuern oder nachzusteuern.

Bei den Behältern kann es sich beispielsweise um Flaschen handeln, wobei verschiedene Formate denkbar sind, beispielsweise Behälter mit einer Grundfläche, die rund, oval, länglich mit abgerundeten Enden oder vieleckig ist.

Bei der Behälter-Behandlungsmaschine kann es sich um verschiedene Arten von Maschinen, beispielsweise um Rundläufermaschinen handeln. Insbesondere kann es sich um eine Direktdruckmaschine oder einen Etikettierter handeln.

Bei den Pucks kann es sich prinzipiell um beliebig geformte Transportelemente handeln, die eine Aussparung aufweisen, in der Behälter stehend transportiert werden und dabei durch die Wände der Aussparung seitlich gestützt und stabilisiert werden.

Die Transportvorrichtung kann im Prinzip jede beliebige Transporteinrichtung zum Fördern von Pucks umfassen, insbesondere Transportbänder oder Förderketten. Dabei können die Pucks zumindest auf Teilstrecken seitlich durch Schienen geführt werden. Dazu können die Pucks insbesondere auch Nuten in der Außenwand aufweisen, in die die Schienen eingreifen. So können die Pucks mit vorgegebener Ausrichtung stabil transportiert werden.

Die Puck-Transportstrecke kann als eine Haupt-Transportstrecke betrachtet werden, die die Pucks aus anderen Bereichen der Anlage, hin zu der Behälter-Behandlungsmaschine und von dieser weg in andere Bereich der Anlage transportiert und entlang derer auch die Behälter transportiert werden (bis auf den Bereich, in dem die Behälter aus den Pucks entnommen sind und in der Behälter-Behandlungsanlage behandelt werden).

Der Puck-Puffer kann als Neben-Transportstrecke für Pucks betrachtet werden. Er kann eine beliebige Fördereinrichtung für Pucks umfassen, insbesondere auch ein oder mehrere Transportbänder. Diese Fördereinrichtung kann insbesondere zum Betreiben unabhängig von der Fördereinrichtung der Haupt-Transportstrecke (Puck-Transportstrecke) ausgebildet sein. Insbesondere kann der Puck-Puffer ein oder mehrere Transportbänder umfassen, die unabhängig von dem bzw. den Transportbändern der Puck-Transportstrecke betreibbar sind.

Dass die Pucks aus dem Puck-Puffer in die Puck-Transportstrecke einkoppelbar sind bedeutet, dass Pucks, die sich im Puck-Puffer befinden, in die Puck-Transportstrecke eingeschleust bzw. dieser zugeführt werden können. Insbesondere können die Pucks automatisch einkoppelbar sein, beispielsweise durch Ansteuern einer Weiche und/oder Verändern der Position von Stoppern, Zuschalten von Sperrsternen und/oder Betätigen eines Antriebs bestimmter Fördereinrichtungen des Puck-Puffers und/oder der Puck-Transportstrecke. Das Einkoppeln kann in einem Einkoppelbereich erfolgen.

Dass die Pucks aus der Puck-Transportstrecke auskoppelbar und dem Puck-Puffer zuführbar sind bedeutet, dass Pucks von der Puck-Transportstrecke weg in den Puck-Puffer ausgeschleust werden können. Die Pucks können insbesondere automatisch auskoppelbar sein, beispielsweise durch Ansteuern einer Weiche und/oder Stoßen des Behälters mittels eines Pusher-Systems. Das Auskoppeln kann in einem Auskoppelbereich erfolgen.

Die Transportvorrichtung kann Elemente aufweisen, die derart ausgebildet und angeordnet sind, dass die Pucks während oder nach dem Einkoppeln und/oder Auskoppeln ausgerichtet werden.

Die Transportvorrichtung ist derart ausgebildet, dass Pucks vor einem Einlauf der Behälter-Behandlungsmaschine aus dem Puck-Puffer in die Puck-Transportstrecke einkoppelbar und nach einem Auslauf der Behälter-Behandlungsmaschine aus der Puck-Transportstrecke auskoppelbar und dem Puck-Puffer zuführbar sind.

Die Begriffe "vor" und "nach" dem Einlauf bzw. Auslauf beziehen sich dabei auf die Transportrichtung der Pucks im Normalbetrieb, beispielsweise wenn Behälter zur Behandlung zur Behälter-Behandlungsmaschine antransportiert und nach der Behandlung davon abtransportiert werden.

Der Einlauf der Behälter-Behandlungsmaschine ist der Bereich, in dem Behälter aus den Pucks entnommen und an die Behälter-Behandlungsmaschine übergeben werden. Der Auslauf der Behälter-Behandlungsmaschine ist der Bereich, in dem Behälter aus der Behälter-Behandlungsmaschine entnommen und wieder in die Pucks eingesetzt werden. Im Einlauf kann beispielsweise der oben beschriebene Einlaufstern angeordnet sein und im Auslauf kann der Auslaufstern angeordnet sein.

Zum Einkoppeln und/oder Auskoppeln von Pucks kann die Transportvorrichtung mindestens eine Führung und/oder mindestens eine Puck-Sperre, beispielsweise in Form eines Stoppers oder Sperrsterns, und/oder eine Weiche und/oder ein Pusher-System umfassen.

Der Vorteil von Führungen bzw. Weichen ist, dass Pucks sanft gelenkt werden, was insbesondere bei Pucks mit Behältern vorteilhaft ist. Bei der Verwendung einer oder mehrerer Führungen kann eine Puck-Sperre vorgesehen sein, insbesondere, wenn zwei Puck-Ströme zusammenlaufen, beispielsweise aus dem Puck-Puffer und von der Puck-Transportstrecke. Mittels der Puck-Sperre kann ein Puck-Zufluss effizient und zeitlich präzise gestoppt und begonnen werden. Eine Weiche hat den Vorteil, dass sie zugleich die Pucks von einem Transportast führen und vom anderen Transportast stoppen kann. Der Vorteil eines Pusher-Systems ist, dass Pucks sehr schnell auf eine andere Bahn gelenkt werden können.

In einem Einkoppel-Bereich, in welchem die Pucks in die Puck-Transportstrecke einkoppelbar sind, sind Führungen derart ausgebildet und angeordnet, dass Pucks aus dem Puck-Puffer geführt mittels der Führungen in die Puck-Transportstrecke eingekoppelt werden.

Im Einkoppelbereich können zwei Transportäste, nämlich der Transportast, auf dem Pucks aus anderen Anlagenbereichen antransportiert werden, und der Transportast des Puck-Puffers, von dem Pucks eingekoppelt werden können, zu einem dritten Transportast zusammengeführt werden, nämlich dem Transportast, der dann zum Einlauf der BehälterBehandlungsanlage hin verläuft.

Um zwischen der normalen Puck-Zufuhr und dem Einkoppeln von Pucks umzustellen, kann ein Puck-Zufluss von einem der beiden Transportäste gestoppt und ein Puck-Zufluss von dem anderen Transportast zugelassen werden, und dabei insbesondere sichergestellt werden, dass die Pucks nicht herabfallen sondern weiter auf den dritten Transportast gelangen.

Dazu können (die) Führungen, beispielsweise Schienen oder Stangen vorgesehen sein, die zum seitlichen Führen der Pucks ausgebildet und angeordnet sind.

Der Puck-Zufluss kann grundsätzlich beispielsweise durch Abstellen der jeweiligen Fördereinrichtung, beispielsweise des jeweiligen Transportbandes, gestoppt werden.

Alternativ oder zusätzlich kann in dem Einkoppel-Bereich mindesten ein Stopper derart ausgebildet und angeordnet sein, so dass durch Einstellen der Position des mindestens einen Stoppers einstellbar ist, ob Pucks aus dem Puck-Puffer eingekoppelt werden oder im Puck-Puffer verbleiben. Insbesondere kann ein Stopper vorgesehen sein, der derart ausgebildet ist, dass der Puck-Fluss auf der Puck-Transportstrecke in Transportrichtung vor dem dritten Transportast gestoppt werden kann. So können beispielsweise nur noch Pucks von dem zweiten Transportast, also aus dem Puck-Puffer, weiter auf den dritten Transportast, also Richtung Behälter-Behandlungsmaschine transportierbar sein.

Der Vorteil der Stopper ist, dass diese eine sofortige Wirkung haben und somit sehr präzise den Behälterfluss stoppen, während durch die Trägheit der Pucks ein einfaches Abstellen der jeweiligen Fördereinrichtung etwas langsamer seine Wirkung entfaltet.

Alternativ kann ein Sperrstern verwendet werden, der Ähnlich wie der Stopper verwendet werden kann, um den Puck-Fluss zu stoppen oder durchzulassen.

Es ist ebenfalls denkbar, dass im Einkoppel-Bereich eine Weiche vorgesehen ist, wobei die Weiche beispielsweise eine schwenkbare Führungsschiene oder Stange umfassen kann, die in einer ersten Position einen Puck-Fluss aus dem Puck-Puffer heraus, also von dem zweiten Transportast, blockiert und zugleich Pucks von dem ersten auf den dritten Transportast leitet, das heißt, einlaufende Pucks entlang der Puck-Transportstrecke zur Behälter-Behandlungsmaschine lenkt. Die Weiche kann weiterhin derart ausgebildet und angeordnet sein, dass in einer zweiten Position der Puck-Fluss von dem ersten Transportast blockiert wird und zugleich Pucks von dem zweiten Transportast, also aus dem Puck-Puffer, auf den dritten Transportast geleitet werden, also auf die Puck-Transportstrecke. Eine solche Weiche ermöglicht es, dass nicht für den ersten und zweiten Transportast jeweils eine Puck-Sperre vorgesehen sein muss und verbessert die Führung der Pucks.

In einem Auskoppel-Bereich, in welchem die Pucks aus der Puck-Transportstrecke auskoppelbar sind, kann ein Pusher-System derart ausgebildet und angeordnet sein, dass durch Betätigung des Pusher-Systems Pucks ausgekoppelt und dem Puck-Puffer zugeführt werden.

Ein solches Pusher-System kann ein Stoßelement (Pusher) umfassen, welches in den Transportweg der Pucks hinein bewegbar ist, so dass Pucks seitlich angestoßen und somit umgelenkt werden. Das Pusher-System kann insbesondere derart ausgebildet sein, dass das Stoßelement automatisch ausgelöst wird, beispielsweise gesteuert durch eine Steuereinrichtung.

Der Vorteil eines solchen Pusher-Systems ist, dass Pucks sehr schnell aus der Puck-Transportstrecke auskoppelbar sind.

In dem Auskoppel-Bereich kann alternativ oder zusätzlich eine Führung derart ausgebildet und angeordnet sein, dass die Pucks geführt mittels der Führung ausgekoppelt und dem Puck-Puffer zugeführt werden. Diese Führung kann ähnlich ausgebildet sein, wie die im Zusammenhang mit dem Einkoppel-Bereich beschriebene Führung, beispielsweise als Stange oder Schiene. Hier ist die Führung zum Aufteilen von Transportästen ausgebildet (nicht zum Zusammenführen von Transportästen wie bei dem Einkoppel-Bereich). Beispielsweise kann die Führung dazu v-förmig ausgebildet sein. Alternativ oder zusätzlich ist eine Weiche, beispielsweise wie schon im Zusammenhang mit dem Einkoppelbereich beschrieben, denkbar.

Weiterhin kann eine Führung vorgesehen sein, die derart seitlich an der Fördereinrichtung, beispielsweise dem Transportband, des Puck-Puffers angeordnet ist, dass von der Puck-Transportstrecke ausgekoppelte Pucks, insbesondere durch das Pusher-System gestoßene Pucks, nicht seitlich von der Fördereinrichtung herunterfallen können.

Im Folgenden werden Beispiele für die Transportwege bzw. Bereiche der Transportvorrichtung beschrieben.

Die Transportvorrichtung kann ein erstes Transportband der Puck-Transportstrecke, ein zweites Transportband der Puck-Transportstrecke und ein Transportband des Puck-Puffers umfassen, wobei das erste Transportband, das zweite Transportband und das Transportband des Puck-Puffers in einem bzw. dem Einkoppel-Bereich, in welchem die Pucks in die Puck-Transportstrecke einkoppelbar sind, parallel, insbesondere unmittelbar aneinander angrenzend, verlaufen, wobei das zweite Transportband zwischen dem ersten Transportband und dem Transportband des Puck-Puffers verläuft.

Mit "unmittelbar aneinander angrenzend" ist in dieser Anmeldung gemeint, dass benachbarte Transportbänder in so geringem Abstand angeordnet sind, dass ein Puck von einem auf das andere Transportband laufen kann.

In einer derartigen Anordnung können auf dem ersten Transportband (beispielsweise aus anderen Anlagenbereichen) oder auf dem Transportband des Puck-Puffers transportierte Pucks, also auf einem außen gelegenen Transportband transportierte Pucks, auf das zentral gelegene zweite Transportband umgeleitet werden, auf dem die Pucks weiter in Richtung Behälter-Behandlungsmaschine transportiert werden. Dies ist vorteilhaft, da die Umlenkungswege gering gehalten werden können. Im Zusammenhang mit dieser Anordnung sind die oben beschriebenen Führungen (gegebenenfalls mit Stoppern) oder die Anordnung mit einer Weiche besonders vorteilhaft, da die Bewegung der Pucks lediglich leicht umgelenkt werden muss. Das ist insbesondere bei Pucks mit Behältern vorteilhaft.

Die Transportvorrichtung kann ein bzw. das zweite Transportband der Puck-Transportstrecke, ein bzw. das Transportband des Puck-Puffers und ein drittes Transportband der Puck-Transportstrecke umfassen. Dabei können das dritte Transportband, das zweite Transportband und das Transportband des Puck-Puffers in einem bzw. dem AuskoppelBereich, in welchem die Pucks aus der Puck-Transportstrecke auskoppelbar sind, parallel, insbesondere unmittelbar aneinander angrenzend, verlaufen, wobei das zweite Transportband zwischen dem dritten Transportband und dem Transportband des Puck-Puffers verläuft.

In einer derartigen Anordnung können auf dem zentral verlaufenden zweiten Transportband aus dem Bereich der Behälter-Behandlungsmaschine auslaufende Pucks entweder durch Umlenken in eine Richtung ausgekoppelt werden oder durch Umlenken in die andere Richtung auf das dritte Transportband geleitet und dort zu anderen Anlagenbereichen transportiert werden. Dies ist vorteilhaft, da die Umlenkungswege gering gehalten werden können. Im Zusammenhang mit dieser Anordnung sind die oben beschriebenen Führungen, insbesondere in Kombination mit dem Pusher-System vorteilhaft, wobei das Pusher-System zum Auskoppeln der Pucks ausgebildet ist und das Umlenken auf das dritte Transportband mittels der Führung erfolgt.

Zwischen dem Transportband des Puck-Puffers und dem zweiten Transportband können noch ein oder mehrere weitere Transportbänder, ebenfalls parallel und an die benachbarten Transportbänder unmittelbar angrenzend verlaufen. Diese Anordnung ist vorteilhaft, um im Betrieb eine etwaige Differenz der Transportgeschwindigkeit der Pucks auf dem zweiten Transportband und auf dem Transportband des Puck-Puffers zu überbrücken.

Ein bzw. das oben schon erwähnte Pusher-System zum Auskoppeln der Pucks aus der Puck-Transportstrecke kann zum Stoßen der Pucks von einem (insbesondere dem zweiten) Transportband der Puck-Transportstrecke auf ein bzw. das Transportband des Puck-Puffers ausgebildet sein. Insbesondere kann das Pusher-System einen Pusher umfassen, der derart ausgebildet ist, dass er, wenn er ausgelöst wird, den Puck seitlich anstößt und somit umlenkt. Der Pusher kann automatisch auslösbar sein, insbesondere durch eine Steuereinrichtung gesteuert auslösbar.

Der Puck-Puffer kann derart ausgebildet sein, dass mindestens so viele Pucks im Puck-Puffer aufnehmbar sind, wie die Behälter-Behandlungsmaschine, zu der die Pucks transportiert werden, Behälter-Halteelemente oder Behandlungsstationen aufweist. Das kann beispielsweise bedeuten, dass die Transporteinrichtung des Puck-Puffers lang genug ist, dass diese Anzahl von Pucks darauf Platz hat.

Die Transportvorrichtung kann auch eine Steuereinrichtung umfassen, die dazu ausgebildet ist, zu steuern, ob Pucks aus dem Puck-Puffer in die Puck-Transportstrecke eingekoppelt werden und ob Pucks von der Puck-Transportstrecke ausgekoppelt und dem Puck-Puffer zugeführt werden. Insbesondere kann die Steuereinrichtung gegebenenfalls zum Steuern der Weichen und/oder des Pusher-Systems, insbesondere zum Auslösen des Pushers, und/oder der Puck-Sperre, beispielsweise des Stoppers oder Sperrsterns, ausgebildet sein.

Die Erfindung betrifft auch ein Verfahren zum Transportieren von Pucks, die zum Behältertransport ausgebildet sind, wobei die Pucks entlang einer Puck-Transportstrecke zu einer Behälter-Behandlungsmaschine hin, insbesondere zu einer Direktdruckmaschine oder Etikettierer, und von der Behälter-Behandlungsmaschine weg transportiert werden. Die Pucks werden aus der Puck-Transportstrecke ausgekoppelt und dem Puck-Puffer zugeführt und/oder aus dem Puck-Puffer in die Puck-Transportstrecke eingekoppelt.

Die Pucks werden insbesondere nach einem Auslauf der Behälter-Behandlungsmaschine aus der Puck-Transportstrecke ausgekoppelt und dem Puck-Puffer zugeführt und/oder vor einem Einlauf der Behälter-Behandlungsmaschine aus dem Puck-Puffer in die Puck-Transportstrecke eingekoppelt.

Insbesondere können, beispielsweise am Anfang einer Charge, leere Pucks aus der Puck-Transportstrecke ausgekoppelt werden und/oder, beispielsweise am Ende einer Charge, leere Pucks in die Puck-Transportstrecke eingekoppelt werden.

Somit sind nach dem Auskoppeln in dem Puck-Puffer leere Pucks vorhanden, die bei Bedarf leer wieder in die Puck-Transportstrecke eingekoppelt werden können, beispielsweise am Ende einer Charge.

Behälter können im Einlauf der Behälter-Behandlungsmaschine aus den Pucks entnommen werden und in der Behälter-Behandlungsmaschine weiter transportiert werden. Die Pucks, aus denen die Behälter entnommen wurden, können unmittelbar weiter zum Auslauf der Behälter-Behandlungsmaschine transportiert werden. Die Behälter können nach dem Durchlaufen der Behälter-Behandlungsmaschine wieder in Pucks eingesetzt werden. Die Pucks können, insbesondere auch auf der Puck-Transportstrecke im Bereich der Behälter-Behandlungsmaschine mit konstanter Geschwindigkeit transportiert werden.

Zu Beginn einer Charge von Behältern können Pucks nach Übergabe der Behälter an die Behälter-Behandlungsmaschine aus der Puck-Transportstrecke ausgekoppelt werden, solange noch keine Behälter zum Auslauf der Behälter-Behandlungsmaschine gelangt sind und die Pucks leer von dem Auslauf der Behälter-Behandlungsmaschine weg transportiert werden.

Da die Pucks zwischen Einlauf und Auslauf der Behälter-Behandlungsmaschine eine geringere Strecke zurücklegen als die Behälter und die Behälter zudem noch behandelt werden, kommen die Pucks am Anfang einer Charge bereits am Auslauf der Behälter-Behandlungsmaschine an, bevor die ersten Behälter fertig behandelt wurden und im Auslauf ankommen. Diese Pucks können dann, beispielsweise für die spätere Verwendung, in den Puck-Puffer ausgekoppelt werden. Sobald die ersten Behälter im Auslauf der Maschine angelangt sind, wo sie in Pucks eingesetzt werden, werden die Pucks (die nun mit Behältern bestückt sind) im Normalfall nicht mehr ausgekoppelt. Es ist jedoch denkbar, in bestimmten Fällen auch eine Auskoppelung von mit Behältern bestückten Pucks durchzuführen, beispielsweise, wenn klar ist, dass der jeweilige Behälter Ausschuss darstellt. Dann können die Behälter aus den im Puck-Puffer befindlichen Pucks, beispielsweise manuell, entfernt werden.

Am Ende einer Charge von Behältern können leere Pucks aus dem Puck-Puffer in die Puck-Transportstrecke eingekoppelt werden, derart, dass die letzten Behälter der Charge nach dem Durchlaufen der Behälter-Behandlungsmaschine in die aus dem Puck-Puffer eingekoppelten Pucks eingesetzt werden.

Der oben schon beschriebene Transportweg von Pucks bzw. Behältern im Bereich der Behälter-Behandlungsmaschine führt auch dazu, dass, nachdem der letzte Behälter an die Behälter-Behandlungsmaschine übergeben wurde und der dadurch frei gewordene Puck mit einem behandelten Behälter besetzt wurde, zunächst aus der (Haupt-)Puck-Transportstrecke keine weiteren Pucks mehr zur Verfügung stehen. Das hat zur Folge, dass in der Behälter-Behandlungsmaschine noch mehrere Behälter sind, für die eigentlich kein Puck mehr zur Verfügung steht, in die sie nach der Behandlung eingesetzt werden können. Durch das Einkoppeln der Pucks aus dem Puck-Puffer können zusätzliche Pucks zur Verfügung gestellt werden, so dass alle Behälter aus der Behälter-Behandlungsmaschine in Pucks gesetzt und abtransportiert werden können.

Besonders vorteilhaft ist der Puck-Puffer, wenn das Auskoppeln am Anfang der Charge mit dem Einkoppeln am Ende der Charge kombiniert wird, weil dann genau die richtige Anzahl an Pucks zur Verfügung steht.

Bei einer Unterbrechung des Betriebs der Behälter-Behandlungsmaschine, insbesondere einem Not-Stopp, kann die Zufuhr von Pucks mit Behältern zu der Behälter-Behandlungsmaschine unterbrochen werden. Um die Behälter-Behandlungsmaschine leerlaufen zu lassen, werden bereits in der Behälter-Behandlungsmaschine befindliche Behälter noch aus der Behälter-Behandlungsmaschine abtransportiert, ohne dass Pucks durch Entnahme von Behältern und Übergabe an die Behälter-Behandlungsmaschine frei werden. In dieser Situation können leere Pucks aus dem Puck-Puffer der Puck-Transportstrecke zugeführt werden (sprich, in diese eingekoppelt werden), so dass die Behälter aus der Behälter-Behandlungsmaschine abtransportiert werden können. Dies wird auch als Leerlaufen bezeichnet und ähnelt dem Ende einer Charge. Wenn die BehälterBehandlungsanlage anschließend wieder den Betrieb aufnimmt, können, ähnlich wie beim Beginn einer Charge, am Anfang überschüssige leere Pucks bereitgestellt werden. Diese leeren Pucks können dem Puck-Puffer zugeführt werden.

Mit anderen Worten tritt bei einer Unterbrechung des Betriebs ein ähnlicher Effekt auf, wie auch beim Anfang und Ende einer Charge. Das heißt, wenn die Behälter-Behandlungsmaschine anhält und sich noch Behälter in der Behälter-Behandlungsmaschine befinden, können leere Pucks aus dem Puck-Puffer zum Abtransport dieser noch in der Behälter-Behandlungsmaschine befindlichen Behälter verwendet werden. Wenn dann der Betrieb wieder aufgenommen wird, werden wie bei dem Anfang einer Charge wieder zunächst leere Pucks aus dem Maschinenauslauf abtransportiert, die dann wiederum dem Puck-Puffer zugeführt werden können.

Das Auskoppeln der Pucks kann mittels eines Pusher-Systems, beispielsweise dem oben beschriebenen Pusher-System, durchgeführt werden, wobei mit dem Pusher-System ein Puck von einem Transportband der Transportstrecke auf ein Transportband des Puck-Puffers gestoßen wird.

Die oben beschriebenen Verfahren können jeweils mittels einer der oben beschriebenen Transportvorrichtungen durchgeführt werden.

Die Erfindung betrifft auch die Verwendung einer der oben beschriebenen Transportvorrichtungen für eines der oben beschriebenen Verfahren zum Transportieren von Pucks.

Es versteht sich, dass die im Zusammenhang mit der Vorrichtung genannten Merkmale und Vorteile ebenso auf das Verfahren und die Verwendung anwendbar sind.

Weitere Merkmale und Vorteile werden nachfolgend anhand der beispielhaften Figuren erläutert. Dabei zeigen:
- Figur 1: eine schematische, nicht-maßstabsgetreue Draufsicht auf eine Transportvorrichtung zum Transportieren von Pucks;
- Figur 2: eine schematische, nicht-maßstabsgetreue Draufsicht auf eine Transportvorrichtung zum Transportieren von Pucks mit beispielhaften Detailansichten eines Einkoppelbereichs und eines Auskoppelbereichs.

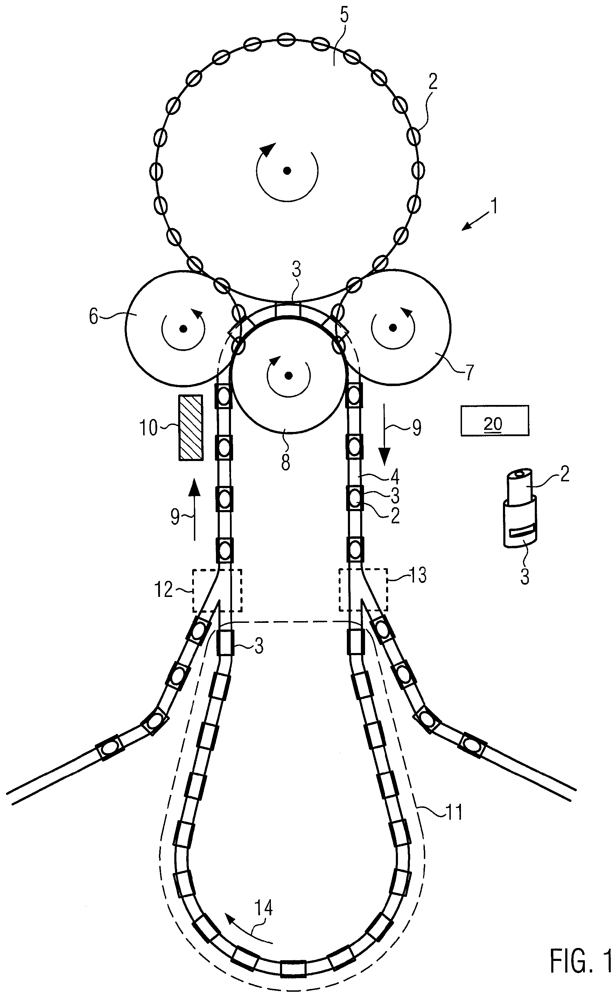

Figur 1 zeigt eine Transportvorrichtung 1 zum Transportieren von Pucks 3, die zum Transport von Behältern 2 ausgebildet sind, entlang einer Puck-Transportstrecke 4 zu einer Behälter-Behandlungsmaschine 5 hin und von der Behälter-Behandlungsmaschine weg.

Im vorliegenden Beispiel ist zwar eine Rundläufermaschine als Behälter-Behandlungsmaschine gezeigt, es können jedoch auch beliebige andere Behälter-Behandlungsmaschinen vorgesehen sein. Bei der Behälter-Behandlungsmaschine kann es sich beispielsweise um eine Direktdruckmaschine, einen Etikettierer oder andere Maschinen handeln.

Weiterhin sind hier ein Einlaufstern 6, ein Auslaufstern 7 und ein Zwischenstern 8 gezeigt. Das heißt, die Figur zeigt eine Drei-Stern-Stellung. Der Zwischenstern ist vorzugsweise in Form eines Hebesterns ausgebildet, welcher die Behälter greift, aus den Pucks hebt, an den Einlaufstern übergibt und anschließend Behälter von dem Auslaufstern übernimmt und diese wieder in einen Puck einsetzt.

Der Einlaufstern und die Behälter-Behandlungsmaschine sind derart angeordnet und ausgebildet, dass der Einlaufstern Behälter an die Behälter-Behandlungsmaschine übergibt, in welcher die Behälter transportiert und behandelt werden, beispielsweise bedruckt. Der Auslaufstern ist derart ausgebildet und angeordnet, dass er Behälter, nachdem sie die Behälter-Behandlungsmaschine durchlaufen haben, von der Behälter-Behandlungsmaschine übernimmt und an den Hebestern übergibt, welche die Behälter dann in die Pucks einsetzt.

Der Einlauf und Auslauf der Behälter-Behandlungsmaschine können auch anders ausgebildet sein als mit den oben beschriebenen Sternen.

Die Transportvorrichtung umfasst hier Förderelemente zum Fördern von Pucks in Form von Transportbändern. Alternativ oder zusätzlich können auch andere Arten von Förderelementen vorgesehen sein, beispielsweise Förderketten. Die Transportrichtung der Pucks ist in der Figur mit dem Bezugszeichen 9 gekennzeichnet.

Am Einlauf der Maschine kann eine Einteilschnecke 10 vorgesehen sein, die die Pucks auf einen Teilungsabstand bringt, der beispielsweise einem Teilungsabstand von Greifelementen des Zwischensterns entspricht.

In der Figur ist weiterhin ein Bereich 11 gezeigt, der einen Puck-Puffer darstellt. Weiterhin ist einlaufseitig ein Bereich 12 dargestellt, auslaufseitig ist ein Bereich 13 dargestellt. Der Bereich 12 wird im Folgenden auch als Einkoppelbereich bezeichnet, da hier Pucks aus dem Puck-Puffer in die Puck-Transportstrecke eingekoppelt werden können. Der Bereich 13 wird als Auskoppel-Bereich bezeichnet, da hier Pucks aus der Puck-Transportstrecke in den Puck-Puffer ausgekoppelt werden können.

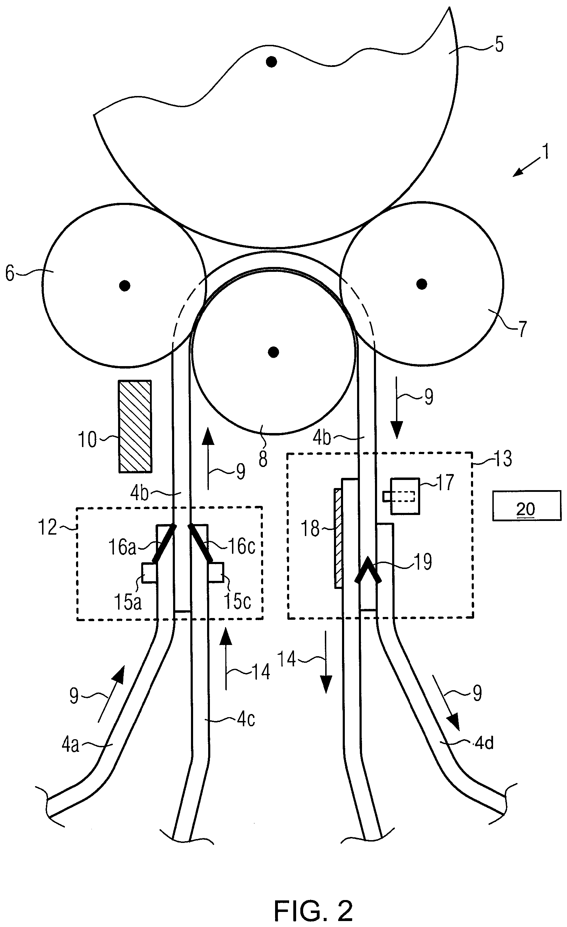

Es gibt verschiedene Möglichkeiten, wie der Auskoppel-Bereich und der Einkoppel-Bereich ausgebildet sein können. Eine solche Möglichkeit ist unten im Zusammenhang mit Figur 2 beschrieben.

Die Figur zeigt auch die Transportrichtung 14 der Pucks im Puck-Puffer. Weiterhin ist eine Steuereinrichtung 20 gezeigt, die insbesondere zum Ansteuern von Elementen im EinkoppelBereich oder Auskoppel-Bereich ausgebildet sein kann.

Weiterhin zeigt die Figur beispielhaft einen Puck mit einem Behälter in Schrägansicht. Der Puck weist beispielhaft Nuten auf. Wenn solche Nuten vorgesehen sind, kann der Puck zumindest zeitweise durch Schienen geführt werden, die in die Nuten eingreifen. Dies ist jedoch nicht zwingend erforderlich.

In Figur 2 ist beispielhaft eine Behälter-Transportvorrichtung mit einer möglichen Ausführung des Einkoppel-Bereichs 12 und Auskoppel-Bereichs 13 im Detail dargestellt. Diese Ausführung der Bereiche 12 und 13 kann beispielsweise für die im Zusammenhang mit Figur 1 beschriebene oder auch für andere Behälter-Transportvorrichtungen verwendet werden.

In diesem Beispiel erfolgt das Einkoppeln der Pucks im Einkoppel-Bereich 12 mittels einer Anordnung aus drei Transportbändern, die im Bereich 12 parallel verlaufen. Das erste Transportband 4a ist das Transportband, welches von anderen Bereichen der Anlage Richtung Behälter-Behandlungsmaschine 5 bis in den Bereich 12 verläuft. Im laufenden Betrieb werden hier Pucks mit Behältern zugeführt.

Das zweite Transportband 4b führt vom Bereich 12 in den Einlauf der Behälter-Behandlungsmaschine. Das Transportband 4c des Puck-Puffers erstreckt sich zwischen dem Auskoppel-Bereich 13 und dem Einkoppel-Bereich 12. Mit diesem Transportband können Pucks aus dem Puck-Puffer in die Puck-Transportstrecke eingekoppelt werden.

Wie hier erkennbar ist, verläuft das Transportband 4b auf einer Teilstrecke im Bereich 12 zwischen dem Transportband 4a und dem Transportband 4c.

In der Figur sind ebenfalls Stopper 15a und 15c gezeigt, die jeweils den Puck-Fluss auf dem zugehörigen Band 4a bzw. 4c stoppen können, indem ihre Position entsprechend eingestellt wird. Alternativ könnten auch Sperrsterne verwendet werden. Es müssen auch keine SperrElemente vorgesehen sein.

Weiterhin sind Führungen 16a und 16c gezeigt, welche jeweils Pucks von dem Transportband 4a bzw. 4c auf das Transportband 4b führen. Durch Einstellen der Stopper-Position (oder mittels eines Sperrsterns), insbesondere durch Ansteuern der Stopper mit einer Steuereinrichtung, kann eingestellt werden, ob Pucks von dem Transportband 4a oder von dem Transportband 4c auf das Transportband 4b gelangen. Mit anderen Worten kann eingestellt werden, ob Pucks aus dem Puck-Puffer der Puck-Transportstrecke zugeführt bzw. in diese eingekoppelt werden, oder ob Pucks aus anderen Anlagenbereichen über das Transportband 4a dem Transportband 4b zugeführt werden.

In Figur 2 ist ebenfalls beispielhaft gezeigt, wie der Auskoppel-Bereich 13 ausgeführt sein kann. Hier sind Transportbänder 4b, 4c und 4d parallel nebeneinander angeordnet, wobei das Transportband 4b zwischen den Transportbändern 4c und 4d angeordnet ist. Hier handelt es sich jeweils um das Ende des Transportbands 4b, das aus dem Auslauf der Behälter-Behandlungsmaschine heraus in den Auskoppel-Bereich 13 führt, bzw. das Transportband 4d, welches von dem Bereich 13 hin zu anderen Anlagenbereichen führt.

Wie hier erkennbar ist, ist ein Pusher-System 17 vorgesehen, das so ausgebildet ist, dass Pucks, welche aus dem Auslauf der Behälter-Behandlungsmaschine heraus transportiert werden, jeweils ein Impuls bzw. Stoß gegeben wird, der die Pucks auf das Transportband 4c stößt. Dies kann mit einem Pusher (Stoßelement) erfolgen. Das Pusher-System kann durch eine/die Steuereinrichtung 20 steuerbar sein. Insbesondere kann die Steuereinrichtung derart ausgebildet sein, dass sie steuert, wann der Pusher ausgelöst wird, um einen Puck auszukoppeln.

Weiterhin ist optional eine Begrenzung 18 vorgesehen, beispielsweise eine Führung oder ein Geländer, die verhindert, dass der Puck von dem Transportband 4c herabfällt. Außerdem ist hier eine Führung 19 gezeigt, die derart angeordnet ist, dass Pucks die nicht auf das Transportband 4c gestoßen werden, von dem Transportband 4b auf das Transportband 4d geleitet werden.

Es sei angemerkt, dass hier zwar eine Variante dargestellt ist, in der im Auskoppel-Bereich 13 drei Transportbänder vorgesehen sind, jedoch können hier durchaus auch mehr Transportbänder vorgesehen sein, insbesondere vier, wobei das bzw. die zusätzlichen Transportbänder zwischen dem Transportband 4b und dem Transportband 4c angeordnet sind. Dies hat den Vorteil, dass die zusätzlichen Transportbänder eine Geschwindigkeitsdifferenz zwischen dem Transportband 4b und dem Transportband 4c überbrücken können.

In dem oben beschriebenen System wird im Einkoppel-Bereich 12 eine Führung verwendet und im Auskoppel-Bereich 13 ein Pusher-System. Grundsätzlich können jedoch beliebige Mechanismen eingesetzt werden, um in den Bereichen 12 und 13 das Auskoppeln oder Einkoppeln der Pucks durchzuführen. Beispielsweise können Pusher-Systeme, Führungen, Weichen, Sperrsterne und Stopper in geeigneten Kombinationen verwendet werden. Es sei jedoch angemerkt, dass beispielsweise das Pusher-System, welches hier im Bereich 13 dargestellt ist, vor allem dann vorteilhaft ist, wenn leere Pucks umgelenkt werden sollen, da diese verhältnismäßig leicht sind. Ein Pusher-System für Pucks mit Behältern ist denkbar, jedoch ist für gefüllte Pucks ein System mit Weichen und/oder Führungen vorteilhafter.

Im Folgenden wird nun ein erfindungsgemäßes Verfahren beschrieben, das beispielsweise mit den oben beschriebenen Vorrichtungen oder vergleichbaren Vorrichtungen durchgeführt werden kann.

Im Behälter-Bearbeitungsbetrieb werden Behälter in Pucks stehend in Richtung Behälter-Behandlungsmaschine entlang der Transportrichtung 9 transportiert. Wenn eine Vorrichtung mit den Transportbändern 4a bis 4c vorliegt, können die Pucks beispielsweise auf dem Transportband 4a antransportiert und dann im Bereich 12 auf das Transportband 4b umgelenkt und auf dem Band 4b weiter in den Einlauf der Behälter-Behandlungsmaschine transportiert werden.

Im Einlauf der Behälter-Behandlungsmaschine werden die Behälter aus den Pucks entnommen und an die Behälter-Behandlungsmaschine übergeben. Beispielsweise können dazu Pucks mit der Einteilschnecke 10 auf geeignete Abstände gebracht, so dass die Behälter mittels des Zwischensterns 9 gegriffen und aus den Pucks gehoben werden können. Dazu kann der Zwischenstern beispielsweise Greifelemente aufweisen, welche durch eine Kurvenführung angehoben werden. Die Behälter können dann von dem Zwischenstern 8 an den Einlaufstern 6 übergeben werden. Der Anlaufstern kann wiederum die Behälter an die Behälter-Behandlungsmaschine 5 übergeben. Auch andere Möglichkeiten, die Behälter an die Behälter-Behandlungsmaschine zu übergeben, sind möglich, insbesondere unter Verwendung anderer Bauteile.

In der Behälter-Behandlungsmaschine können im Behälter-Behandlungsbetrieb Behälter behandelt, beispielsweise bedruckt oder etikettiert, werden.

Nach dem Durchlaufen der Behälter-Behandlungsmaschine werden die Behälter wieder in Pucks eingesetzt. Beispielsweise kann dazu der Auslaufstern 7 die Behälter aus der Behälter-Behandlungsmaschine entnehmen und dem Zwischenstern 8 übergeben, welcher die Behälter übernimmt, absenkt, und wieder in Pucks einsetzt. Auch andere Möglichkeiten, die Behälter aus der Behälter-Behandlungsmaschine zu entnehmen, sind möglich, insbesondere unter Verwendung anderer Bauteile.

Die Pucks selbst durchlaufen nach dem Entnehmen der Behälter beispielsweise eine Strecke, die in etwa dem Umfang des Zwischensterns 8 entspricht. Dabei können beispielsweise im Bereich der Behälter-Behandlungsmaschine Umlenkelemente für Transportbänder und ein Überschub für die Pucks vorgesehen sein, um die Pucks um eine enge Kurve zu ermöglichen.

Nachdem die Behälter wieder in die Pucks eingesetzt wurden, werden die Pucks mit den Behältern von der Behälter-Behandlungsmaschine abtransportiert. Beispielsweise kann das mittels der Transportbänder 4b und 4d erfolgen. Insbesondere können die Pucks mit den Behältern auf dem Transportband 4b in den Auskoppel-Bereich 13 transportiert und dort auf das Transportband 4d umgelenkt werden und anschließend beispielsweise in andere Anlagenbereiche transportiert werden. Alternativ können die Pucks hier ausgekoppelt und dem Puck-Puffer zugeführt werden, beispielsweise, indem sie auf das Transportband 4c des Puck-Puffers umgelenkt werden.

In der Anordnung mit den Transportbändern 4a bis 4c und den Stoppern ist, wenn Behälter aus anderen Anlagenbereichen in die Behälter-Behandlungsmaschine transportiert werden sollen, der Stopper 15c in einer derartigen Position, dass Pucks, die sich auf dem Transportband 4c befinden, nicht auf das Transportband 4b transportiert werden. Der Stopper 15a ist in einer Position, in der zugelassen wird, dass Pucks vom Transportband 4a auf das Transportband 4b transportiert werden. Diese Funktion kann alternativ auch mit einem Sperrstern umgesetzt werden. Die Einstellung der Position kann durch eine Steuereinrichtung automatisch gesteuert werden.

Im Folgenden wird ein Einkoppeln von Pucks aus dem Puck-Puffer in die Puck-Transportstrecke anhand der Konfiguration in Figur 2 beschrieben. Dabei werden Pucks, die sich bereits im Puck-Puffer, beispielsweise auf dem Transportband 4c, befinden in Transportrichtung, also entlang des Pfeils 14, in den Einkoppel-Bereich 12 hinein transportiert. Der Stopper 15c wird in eine Position gebracht, so dass die Pucks nicht gestoppt werden. Aufgrund der Führung 16c werden die Pucks dann auf das Band 4b umgeleitet und in Transportrichtung 9 weitertransportiert. Dabei ist der Stopper 15a in einer Position angeordnet, die verhindert, dass Pucks von dem Transportband 4a auf das Transportband 4b transportiert werden. Das Einkoppeln kann auch anderweitig erfolgen, insbesondere auch mit anderen Bauteilen, wie beispielsweise Weichen.

Das Einkoppeln kann am Ende einer Charge erfolgen, wenn nicht mehr genug leere Pucks durch Entnahme von Behältern aus Pucks bereitgestellt werden. Dann kann eine entsprechende Anzahl von Pucks aus dem Puck-Puffer eingekoppelt werden und die letzten Behälter der Charge abtransportiert werden. Alternativ oder zusätzlich kann das Einkoppeln auch bei einer Unterbrechung des Betriebs der Behälter-Behandlungsmaschine erfolgen, wenn diese leer gefahren wird.

Im Folgenden wird ein Auskoppeln von Pucks, sprich wenn Pucks aus der Puck-Transportstrecke ausgekoppelt und in den Puck-Puffer transportiert werden beispielhaft anhand von der in Figur 2 gezeigten Vorrichtung beschrieben. Das Pusher-System 17 wird dabei so betrieben, dass Pucks, die aus dem Auslauf der Behälter-Behandlungsmaschine auf dem Transportband 4b transportiert werden, auf das Transportband 4c gestoßen werden, wo sie gegebenenfalls gegen die Führung 18 stoßen. Die Pucks werden dann auf dem Transportband 4c in Richtung des Pfeils 14 weitertransportiert. Die Führung 19 sorgt dabei gegebenenfalls noch dafür, dass die Pucks auf dem Transportband 4c geführt transportiert werden. Das Einkoppeln kann auch anderweitig erfolgen, insbesondere auch mit anderen Bauteilen.

Das Auskoppeln kann zu Beginn einer Charge erfolgen. Da das Durchlaufen der Behälter-Behandlungsmaschine (einschließlich Behandlung der Behälter) länger braucht als der Transport der Pucks zwischen Einlauf und Auslauf der Behälter-Behandlungsmaschine, stehen für die ersten Pucks im Auslauf noch keine Behälter bereit, die in die Pucks eingesetzt werden könnten. Diese Pucks laufen dann leer aus dem Auslauf der Behälter-Behandlungsmaschine und können ausgekoppelt und dem Puck-Puffer zugeführt werden.

Insbesondere kann auch das Auskoppeln zu Beginn einer Charge mit einem Einkoppeln am Ende dieser Charge kombiniert werden.

Das Einkoppeln kann auch bei einer Betriebsunterbrechung der Behälter-Behandlungsmaschine erfolgen, wenn die Behälter-Behandlungsmaschine leer gefahren werden soll.

Das Auskoppeln kann auch nach einem Wiederanfahren der Behälter-Behandlungsmaschine nach einer Unterbrechung des Betriebs erfolgen, insbesondere nach dem oben beschriebenen Leerfahren, oder um Pucks mit Behältern, die Ausschuss darstellen, auszusortieren. In letzterem Fall kann das Verfahren auch umfassen, dass die Behälter, die Ausschuss darstellen, aus den Pucks entnommen werden, wenn diese im Puck-Puffer angelangt sind.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Transportvorrichtung (1) zum Transportieren von Pucks (3), die zum Behältertransport ausgebildet sind, umfassend eine Puck-Transportstrecke (4) zum Transportieren von Pucks (3) zu einer Behälter-Behandlungsmaschine (5) hin, insbesondere zu einer Direktdruckmaschine oder einem Etikettierer, und von der Behälter-Behandlungsmaschine (5) weg,
versehen mit einem Puck-Puffer (11), aus dem Pucks (3) in die Puck-Transportstrecke (4) einkoppelbar und dem aus der Puck-Transportstrecke (4) ausgekoppelte Pucks (3) zuführbar sind,
wobei die Pucks (3) vor einem Einlauf der Behälter-Behandlungsmaschine (5) aus dem Puck-Puffer (11) in die Puck-Transportstrecke (4) einkoppelbar und nach einem Auslauf der Behälter-Behandlungsmaschine (5) aus der Puck-Transportstrecke auskoppelbar und dem Puck-Puffer (11) zuführbar sind,
**dadurch gekennzeichnet, dass**
in einem Einkoppel-Bereich (12), in welchem die Pucks (3) in die Puck-Transportstrecke (4) einkoppelbar sind, Führungen (16a, 16c) derart ausgebildet und angeordnet sind, dass Pucks (3) aus dem Puck-Puffer (11) geführt mittels der Führungen (16a, 16c) in die Puck-Transportstrecke (4) eingekoppelt werden.

2. Transportvorrichtung (1) nach Anspruch 1, wobei die Transportvorrichtung (1) zum Einkoppeln und/oder Auskoppeln der Pucks (3) mindestens eine Führung (16a, 16c, 19) und/oder mindestens eine Puck-Sperre (15a, 15c), beispielsweise in Form eines Stoppers oder Sperrsterns, und/oder eine Weiche und/oder ein Pusher-System (17) umfasst.

3. Transportvorrichtung (1) nach Anspruch 1 oder 2,
wobei in einem bzw. dem Einkoppel-Bereich (12), in welchem die Pucks (3) in die Puck-Transportstrecke (4) einkoppelbar sind, der bzw. mindesten ein Stopper (15a, 15c) derart ausgebildet und angeordnet ist, dass durch Einstellen der Position des mindestens einen Stoppers (15c) einstellbar ist, ob Pucks (3) aus dem Puck-Puffer (11) eingekoppelt werden oder im Puck-Puffer (11) verbleiben, und/oder
wobei in einem bzw. dem Einkoppel-Bereich (12), in welchem die Pucks (3) in die Puck-Transportstrecke (4) einkoppelbar sind, der bzw. ein Sperrstern derart ausgebildet und angeordnet ist, dass durch Zuschalten des mindestens einen Sperrsterns einstellbar ist, ob Pucks (3) aus dem Puck-Puffer (11) eingekoppelt werden oder im Puck-Puffer (11) verbleiben.

4. Transportvorrichtung (1) nach einem der vorangegangenen Ansprüche,
wobei in einem Auskoppel-Bereich (13), in welchem die Pucks (3) aus der Puck-Transportstrecke (4) auskoppelbar sind, ein bzw. das Pusher-System (17) derart ausgebildet und angeordnet ist, dass durch Betätigung des Pusher-Systems (17) Pucks (3) ausgekoppelt und dem Puck-Puffer (11) zugeführt werden, und/oder
wobei in einem bzw. dem Auskoppel-Bereich (13) eine Führung (19) derart ausgebildet und angeordnet ist, dass die Pucks (3) geführt mittels der Führung (17) ausgekoppelt und dem Puck-Puffer (11) zugeführt werden.

5. Transportvorrichtung (1) nach einem der vorangegangenen Ansprüche,
umfassend ein erstes Transportband (4a) der Puck-Transportstrecke (4), ein zweites Transportband (4b) der Puck-Transportstrecke (4) und ein Transportband (4c) des Puck-Puffers (11),
wobei das erste Transportband (4a), das zweite Transportband (4b) und das Transportband (4c) des Puck-Puffers (11) in einem bzw. dem Einkoppel-Bereich (12), in welchem die Pucks (3) in die Puck-Transportstrecke (4) einkoppelbar sind, parallel, insbesondere unmittelbar aneinander angrenzend, verlaufen, wobei das zweite Transportband (4b) zwischen dem ersten Transportband (4a) und dem Transportband (4c) des Puck-Puffers (11) verläuft.

6. Transportvorrichtung (1) nach einem der vorangegangenen Ansprüche,
umfassend ein bzw. das zweite Transportband (4b) der Puck-Transportstrecke (4), ein bzw. das Transportband (4c) des Puck-Puffers (11) und ein drittes Transportband (4d) der Puck-Transportstrecke (4),
wobei ein bzw. das zweite Transportband (4b), ein bzw. das Transportband (4c) des Puck-Puffers (11) und das dritte Transportband (4d) in einem bzw. dem Auskoppel-Bereich (12), in welchem die Pucks (3) aus der Puck-Transportstrecke (4) auskoppelbar sind, parallel, insbesondere unmittelbar aneinander angrenzend, verlaufen, wobei das zweite Transportband (4b) zwischen dem dritten Transportband (4d) und dem Transportband (4c) des Puck-Puffers (11) verläuft.

7. Transportvorrichtung (1) nach einem der vorangegangenen Ansprüche, wobei ein bzw. das Pusher-System (17) zum Auskoppeln der Pucks (3) aus der Puck-Transportstrecke (4) zum Stoßen der Pucks (3) von einem, insbesondere dem zweiten, Transportband (4b) der Puck-Transportstrecke (4) auf ein Transportband (4c) des Puck-Puffers ausgebildet ist.

8. Transportvorrichtung (1) nach einem der vorangegangenen Ansprüche, wobei der Puck-Puffer (11) derart ausgebildet ist, dass mindestens so viele Pucks (3) im Puck-Puffer (11) aufnehmbar sind, wie die Behälter-Behandlungsmaschine (5), zu der die Pucks (3) transportiert werden, Behälter-Halteelemente und/oder Behandlungsstationen aufweist.

9. Verfahren zum Transportieren von Pucks (3), die zum Behältertransport ausgebildet sind, wobei die Pucks entlang einer Puck-Transportstrecke (4) zu einer Behälter-Behandlungsmaschine (5) hin, insbesondere zu einer Direktdruckmaschine oder einem Etikettierer, und von der Behälter-Behandlungsmaschine (5) weg transportiert werden,
wobei Pucks aus der Puck-Transportstrecke (4) ausgekoppelt werden und einem Puck-Puffer (11) zugeführt werden und/oder Pucks (3) aus dem Puck-Puffer (11) in die Puck-Transportstrecke (4) eingekoppelt werden,
wobei Pucks (3) nach einem Auslauf der Behälter-Behandlungsmaschine (5) aus der Puck-Transportstrecke (4) ausgekoppelt werden und dem Puck-Puffer (11) zugeführt werden bzw. vor einem Einlauf der Behälter-Behandlungsmaschine (5) aus dem Puck-Puffer (11) in die Puck-Transportstrecke (4) eingekoppelt werden,
**dadurch gekennzeichnet, dass**
in einem Einkoppel-Bereich (12) Pucks (3) aus dem Puck-Puffer (11) geführt mittels Führungen (16a, 16c) in die Puck-Transportstrecke (4) eingekoppelt werden.

10. Verfahren nach Anspruch 9, wobei leere Pucks (3) aus der Puck-Transportstrecke (4) ausgekoppelt werden und/oder leere Pucks (3) in die Puck-Transportstrecke (4) eingekoppelt werden.

11. Verfahren nach Anspruch 9 oder 10, wobei Behälter (2) im Einlauf der Behälter-Behandlungsmaschine (5) aus den Pucks (3) entnommen werden und in der Behälter-Behandlungsmaschine (5) weiter transportiert werden und wobei die Pucks (3), aus denen die Behälter (2) entnommen wurden, unmittelbar weiter zum Auslauf der Behälter-Behandlungsmaschine (5) transportiert werden, und Behälter (2) nach dem Durchlaufen der Behälter-Behandlungsmaschine (5) wieder in Pucks eingesetzt werden.

12. Verfahren nach einem der Ansprüche 9 bis 11, wobei zu Beginn einer Charge von Behältern (2) Pucks (3) nach Übergabe der Behälter (2) an die Behälter-Behandlungsmaschine (5) aus der Puck-Transportstrecke (4) ausgekoppelt werden, solange noch keine Behälter (2) zum Auslauf der Behälter-Behandlungsmaschine (5) gelangt sind und die Pucks (3) leer von dem Auslauf der Behälter-Behandlungsmaschine (5) weg transportiert werden.

13. Verfahren nach einem der Ansprüche einem der Ansprüche 9 bis 11, wobei am Ende einer Charge von Behältern (2) leere Pucks aus dem Puck-Puffer (11) in die Puck-Transportstrecke (4) eingekoppelt werden, derart, dass die letzten Behälter (2) der Charge nach dem Durchlaufen der Behälter-Behandlungsmaschine (5) in die aus dem Puck-Puffer (11) eingekoppelten Pucks (3) eingesetzt werden.

14. Verfahren nach einem der Ansprüche einem der Ansprüche 9 bis 11, wobei bei einer Unterbrechung des Betriebs der Behälter-Behandlungsmaschine (5), insbesondere einem Not-Stopp, die Zufuhr (3) von Pucks mit Behältern (2) zu der Behälter-Behandlungsmaschine (5) unterbrochen wird und dem Puck-Puffer (11) leere Pucks (3) zugeführt werden und/oder bei einem erneuten Aufnehmen des Betriebs der Behälter-Behandlungsmaschine (5) nach einer Unterbrechung, zunächst leere Pucks (3) aus dem Puck-Puffer (11) der Puck-Transportstrecke (4) zugeführt werden, bevor die Zufuhr von Pucks (3) mit Behältern (2) zu der Behälter-Behandlungsmaschine (5) wieder aufgenommen wird.

15. Verfahren nach einem der Ansprüche 9 bis 14, wobei das Auskoppeln von Pucks (3) mittels eines Pusher-Systems (17) durchgeführt wird, wobei mit dem Pusher-System ein Puck (3) von einem Transportband (4b) der Transportstrecke (4) auf ein Transportband (4c) des Puck-Puffers (11) gestoßen wird.

## Claims

1. A transporting apparatus (1) for transporting pucks (3) configured for transporting containers comprising a puck transport path (4) for transporting pucks (3) towards a container treatment machine (5), in particular a direct printing machine or a labeller, and away from the container treatment machine (5),
provided with a puck buffer (11) from which pucks (3) can be coupled into the puck transport path (4) and to which pucks (3) coupled out of the puck transport path (4) can be supplied,
wherein the pucks (3) before an entrance into the container treatment machine (5) can be coupled into the puck transport path from the puck buffer (11) and can be coupled out of the puck transport path and supplied to the puck buffer (11) after an exit of the container treatment machine (5),
**characterized in that**
in a coupling region (12) in which the pucks (3) can be coupled into the puck transport path (4), guides (16a, 16c) are formed and arranged such that the pucks (3) are guided by means of the guides (16a, 16c) from the puck buffer (11) to be coupled into the puck transport path (4).

2. The transporting apparatus (1) according to claim 1, wherein the transporting apparatus (1) comprises at least one guide (16a, 16c, 19) and/or at least one puck barrier (15a, 15c) for instance in form of a stop or blocking star and/or a switch and/or a pusher system (17) for coupling and/or uncoupling the pucks (3).

3. The transporting apparatus (1) according to claims 1 or 2,
wherein in a or the coupling region (12) in which the pucks (3) can be coupled into the puck transport path (4) the or the at least one stop (15a, 15c) is formed and arranged such that by adjusting the position of the at least one stop (15c) it can be determined whether the pucks (3) are coupled from the puck buffer (11) or remain in the puck buffer (11), and/or
wherein in a or the coupling region (12) in which the pucks (3) can be coupled into the puck transport path (4) the or the at least one blocking star is formed and arranged such that by activating the at least one blocking star it can be determined whether the pucks (3) are coupled from the puck buffer (11) or remain in the puck buffer (11).

4. The transporting apparatus (1) according to any one of the preceding claims,
wherein in an uncoupling region (13) in which the pucks (3) can be uncoupled from the puck transport path (4), a or the pusher system (17) is formed and arranged such that by actuating the pusher system (17) pucks (3) can be uncoupled and supplied to the puck buffer (11) and/or
wherein in a or the uncoupling region (13) a guide (19) is formed and arranged such that the pucks (3) are uncoupled while being guided by the guide (17) and supplied to the puck buffer (11).

5. The transporting apparatus (1) according to any one of the preceding claims,
comprising a first transport belt (4a) of the puck transport path (4), a second transport belt (4b) of the puck transport path (4) and a transport belt (4c) of the puck buffer (11),
wherein the first transport belt (4a), the second transport belt (4b) and the transport belt (4c) of the puck buffer (11) run parallel, in particular directly adjacent to each other, in a or the coupling region (12) in which the pucks (3) can be coupled into the puck transport path (4), wherein the second transport belt (4b) runs between the first transport belt (4a) and the transport belt (4c) of the puck buffer (11).

6. The transporting apparatus (1) according to any one of the preceding claims,
comprising a or the second transport belt (4b) of the puck transport path (4), a or the transport belt (4c) of the puck buffer (4) and a third transport belt (4d) of the puck transport path (4),
wherein a or the second transport belt (4b), a or the transport belt (4c) of the puck buffer (11) and the third transport belt (4d) run parallel, in particular directly adjacent to each other, in a or the uncoupling region (12) in which the pucks (3) can be uncoupled from the puck transport path (4), wherein the second transport belt (4b) runs between the third transport belt (4d) and the transport belt (4c) of the puck buffer (11).

7. The transporting apparatus (1) according to anyone of the preceding claims, wherein a or the pusher system (17) for uncoupling the pucks (3) from the puck transport path (4) is configured to push the pucks (3) from a, in particular the second transport belt (4b) of the puck transport path (4) to a transport belt (4c) of the puck buffer.

8. The transporting apparatus (1) according to anyone of the preceding claims, wherein the puck buffer (11) is configured such that at least as many pucks (3) can be received in the puck buffer (11) as the container treatment machine (5) whereto the pucks (3) are conveyed has container support members and/or treatment stations.

9. A method for transporting pucks (3) configured for transporting containers, wherein the pucks are transported along a puck transport path (4) towards a container treatment machine (5), in particular a direct printing machine or a labeller, and away from the container treatment machine (5),
wherein pucks are uncoupled from the puck transport path (4) and supplied to a puck buffer (11) and/or pucks (3) from the puck buffer (11) are coupled into the puck transport path (4),
wherein pucks (3) are uncoupled from the puck transport path (4) after an exit of the container treatment machine (5) and are supplied to the puck buffer (11) or are coupled from the puck buffer (11) into the puck transport path (4) before an entrance of the container treatment machine (5),
**characterized in that**
pucks (3) are guided by means of guides (16a, 16c) from the puck buffer (11) to be coupled into the puck transport path (4).

10. The method according to claim 9, wherein empty pucks (3) are uncoupled from the puck transport path (4) and/or empty pucks (3) are coupled into the puck transport path (4).

11. The method according to claims 9 or 10, wherein containers (2) are removed from the pucks (3) in the entrance of the container treatment machine (5) and transported further within the container treatment machine (5) and wherein the pucks (3) wherefrom the containers (2) were removed are directly transported further to the exit of the container treatment machine (5) and the containers (2) are reinserted into the pucks after passing through the container treatment machine (5).

12. The method according to anyone of claims 9 to 11, wherein at the beginning of a charge of containers (2) pucks (3) are uncoupled from the puck transport path (4) after transfer of the containers (2) to the container treatment machine (5) as long as containers (2) have not yet reached the exit of the container treatment machine (5) and the pucks (3) are transported away from the exit of the container treatment machine (5) in an empty state.

13. The method according to any one of claims 9 to 11, wherein at the end of a charge of containers (2) empty pucks are coupled from the puck buffer (11) into the puck transport path (4) so that the last containers (2) of the charge are inserted into the pucks (3) coupled from the puck buffer (11) after passing through the container treatment machine (5).

14. The method according to any one of claims 9 to 11, wherein during an interruption of the operation of the container treatment machine (5), in particular an emergency stop, the supply (3) of pucks with containers (2) to the container treatment machine (5) is halted and empty pucks (3) are supplied to the puck buffer (11) and/or when the operation of the container treatment machine (5) is resumed after a stop initially empty pucks (3) from the puck buffer (11) are supplied to the puck transport path (4) before the supply of pucks (3) with containers (2) to the container treatment machine (5) is resumed.

15. The method according to any one of claims 9 to 14, wherein the uncoupling of pucks (3) is carried out by means of a pusher system, wherein with the pusher system a puck (3) is pushed from a transport belt (4b) of the transport path (4) onto a transport belt (4c) of the puck buffer (11).

## Revendications

1. Dispositif de transport (1) permettant de transporter des palets (3) conçus pour le transport de récipients, comprenant une section de transport de palets (4) permettant de transporter des palets (3) vers une machine de traitement de récipients (5), en particulier vers une machine d'impression directe ou une étiqueteuse, et à distance de la machine de traitement de récipients (5),
muni d'un tampon de palets (11), à partir duquel des palets (3) peuvent être couplés dans la section de transport de palets (4) et vers lequel des palets (3) découplés de la section de transport de palets (4) peuvent être acheminés,
dans lequel les palets (3) peuvent être couplés dans la section de transport de palets (4) à partir du tampon de palets (11) avant une entrée de la machine de traitement de récipients (5) et peuvent être découplés de la section de transport de palets après une sortie de la machine de traitement de récipients (5) et peuvent être acheminés vers le tampon de palets (11),
**caractérisé en ce que**
dans une région de couplage (12) au sein de laquelle les palets (3) peuvent être couplés à la section de transport de palets (4), des guides (16a, 16c) sont conçus et agencés de sorte que les palets (3) sont couplés dans la section de transport de palets (4) en étant guidés à partir du tampon de palets (11) au moyen des guides (16a, 16c).

2. Dispositif de transport (1) selon la revendication 1, dans lequel le dispositif de transport (1) permettant de coupler et/ou découpler des palets (3) comprend au moins un guide (16a, 16c, 19) et/ou au moins un blocage de palet (15a, 15c), par exemple sous la forme d'une butée ou d'une étoile de blocage, et/ou un aiguillage et/ou un système de poussoir (17).

3. Dispositif de transport (1) selon la revendication 1 ou 2, dans lequel la, ou au moins une, butée (15a, 15c) est formée et agencée dans une, ou dans la, région de couplage (12), au sein de laquelle les palets (3) peuvent être couplés dans la section de transport de palets (4), de telle manière qu'il est possible de régler si les palets (3) sont couplés à partir du tampon de palets (11) ou restent dans le tampon de palets (11) en réglant la position de la au moins une butée (15c), et/ou
dans une, ou la, région de couplage (12) au sein de laquelle les palets (3) peuvent être couplés dans la section de transport de palets (4), la, ou une, étoile de blocage est formée et agencée de telle manière qu'il est possible de régler si les palets (3) sont couplés à partir du tampon de palets (11) ou restent dans le tampon de palets (11) en activant la au moins une étoile de blocage.

4. Dispositif de transport (1) selon l'une quelconque des revendications précédentes, dans lequel, dans une région de découplage (13) au sein de laquelle les palets (3) peuvent être découplés de la section de transport de palets (4), un, ou le, système de poussoir (17) est conçu et agencé de telle manière que des palets (3) sont découplés et acheminés vers le tampon de palets (11) en actionnant le système de poussoir (17), et/ou
dans lequel un guide (19) est conçu et agencé dans une, ou la, région de découplage (13) de telle manière que les palets (3) sont découplés en étant guidés au moyen du guide (17) et sont acheminés vers le tampon de palets (11).

5. Dispositif de transport (1) selon l'une quelconque des revendications précédentes, comprenant une première bande transporteuse (4a) de la section de transport de palets (4), une deuxième bande transporteuse (4b) de la section de transport de palets (4) et une bande transporteuse (4c) du tampon de palets (11),
dans lequel la première bande transporteuse (4a), la deuxième bande transporteuse (4b) et la bande transporteuse (4c) du tampon de palets (11) s'étendent parallèlement, en particulier de manière directement adjacente l'une à l'autre, dans une, ou la, région de couplage (12) au sein de laquelle les palets (3) peuvent être couplés dans la section de transport de palets (4), dans lequel la deuxième bande transporteuse (4b) s'étend entre la première bande transporteuse (4a) et la bande transporteuse (4c) du tampon de palets (11).

6. Dispositif de transport (1) selon l'une quelconque des revendications précédentes, comprenant une, ou la deuxième, bande transporteuse (4b) de la section de transport de palets (4), une, ou la, bande transporteuse (4c) du tampon de palets (11) et une troisième bande transporteuse (4d) de la section de transport de palets (4),
dans lequel une, ou la deuxième, bande transporteuse (4b), une, ou la, bande transporteuse (4c) du tampon de palets (11) et la troisième bande transporteuse (4d) s'étendent parallèlement, en particulier de manière directement adjacente l'une à l'autre, dans une, ou la, région de découplage (12) au sein de laquelle les palets (3) peuvent être découplés de la section de transport de palets (4), dans lequel la deuxième bande transporteuse (4b) s'étend entre la troisième bande transporteuse (4d) et la bande transporteuse (4c) du tampon de palets (11).

7. Dispositif de transport (1) selon l'une quelconque des revendications précédentes, dans lequel un, ou le, système de poussoir (17) est conçu pour découpler les palets (3) de la section de transport de palets (4) afin de pousser les palets (3) à partir d'une, en particulier de la deuxième, bande transporteuse (4b) de la section de transport de palets (4) sur une bande transporteuse (4c) du tampon de palets.

8. Dispositif de transport (1) selon l'une quelconque des revendications précédentes, dans lequel le tampon de palets (11) est conçu de telle manière qu'au moins autant de palets (3) peuvent être accueillis dans le tampon de palets (11) qu'il y a d'éléments de retenue de récipients et/ou de postes de traitement dans la machine de traitement de récipients (5) vers laquelle les palets (3) sont transportés.

9. Procédé de transport de palets (3) conçus pour le transport de récipients, dans lequel les palets sont transportés le long d'une section de transport de palets (4) vers une machine de traitement de récipients (5), en particulier vers une machine d'impression directe ou une étiqueteuse, et à distance de la machine de traitement de récipients (5),
dans lequel des palets sont découplés de la section de transport de palets (4) et acheminés vers un tampon de palets (11) et/ou des palets (3) sont couplés dans la section de transport de palets (4) à partir du tampon de palets (11),
dans lequel des palets (3) sont découplés de la section de transport de palets (4) après une sortie de la machine de traitement de récipients (5) et sont acheminés vers le tampon de palets (11) ou sont couplés dans la section de transport de palets (4) à partir du tampon de palets (11) avant une entrée de la machine de traitement de récipients (5),
**caractérisé en ce que**
dans une région de couplage (12), des palets (3) sont couplés dans la section de transport de palets (4) en étant guidés à partir du tampon de palets (11) au moyen de guides (16a, 16c).

10. Procédé selon la revendication 9, dans lequel des palets (3) vides sont découplés de la section de transport de palets (4) et/ou des palets (3) vides sont couplés dans la section de transport de palets (4).

11. Procédé selon la revendication 9 ou 10, dans lequel des récipients (2) sont retirés des palets (3) à l'entrée de la machine de traitement de récipients (5) et sont transportés plus avant dans la machine de traitement de récipients (5), et dans lequel les palets (3) dont ont été retirés les récipients (2) sont transportés plus avant directement vers la sortie de la machine de traitement de récipients (5), et les récipients (2) sont réinsérés dans des palets après avoir traversé la machine de traitement de récipients (5).

12. Procédé selon l'une quelconque des revendications 9 à 11, dans lequel, au début d'un lot de récipients (2), des palets (3) sont découplés de la section de transport de palets (4) après le transfert des récipients (2) à la machine de traitement de récipients (5) tant qu'aucun récipient (2) n'est encore parvenu à la sortie de la machine de traitement de récipients (5), et les palets (3) sont transportés à vide à distance de la sortie de la machine de traitement de récipients (5).

13. Procédé selon l'une quelconque des revendications 9 à 11, dans lequel, à la fin d'un lot de récipients (2), des palets vides sont couplés dans la section de transport de palets (4) à partir du tampon de palets (11) de telle manière que les derniers récipients (2) du lot, après avoir traversé la machine de traitement de récipients (5), sont insérés dans les palets (3) couplés à partir du tampon de palets (11).

14. Procédé selon l'une quelconque des revendications 9 à 11, dans lequel, lors d'une interruption du fonctionnement de la machine de traitement de récipients (5), en particulier lors d'un arrêt d'urgence, l'acheminement (3) de palets munis de récipients (2) vers la machine de traitement de récipients (5) est interrompu et des palets (3) vides sont acheminés vers le tampon de palets (11) et/ou, lors d'une reprise du fonctionnement de la machine de traitement de récipients (5) après une interruption, des palets (3) vides sont d'abord acheminés vers la section de transport de palets (4) à partir du tampon de palets (11) avant que l'acheminement de palets (3) munis de récipients (2) vers la machine de traitement de récipients (5) ne reprenne.

15. Procédé selon l'une quelconque des revendications 9 à 14, dans lequel le découplage des palets (3) est effectué au moyen d'un système de poussoir (17), dans lequel un palet (3) est poussé d'une bande transporteuse (4b) de la section de transport (4) sur une bande transporteuse (4c) du tampon de palets (11) par le système de poussoir.
